# EUROPÄISCHE PATENTANMELDUNG

(11) **EP 2 159 005 A1**
(43) Veröffentlichungstag der Anmeldung: **03.03.2010**
(21) Anmeldenummer: 08015391.9
(22) Anmeldetag: 01.09.2008
(51) Int. Cl.: B25B 13/56, B25B 15/00, B25B 27/00, B25G 1/08

(54) **Handwerkszeug oder Fahrzeug**

(71) Anmelder: Skronn, Ulrich, 88046 Friedrichshafen (DE)
(72) Erfinder: Skronn, Ulrich, 88046 Friedrichshafen (DE)
(74) Vertreter: Engelhardt, Volker

(57) **Zusammenfassung**

Bei einem Werkzeug (11) zum mobilen Einsatz, insbesondere an Radfahrzeugen (12), mit einem oder mehreren in einem Griffstück (12) eingesetzten Bits (13, 13', 13", 13'''), die wahlweise mit dem Griffstück (12) koppelbar sind, soll die Anwendung des Werkzeuges (11) bei Reparaturarbeiten optimal einsetzbar sein.
Dies wird dadurch erreicht, dass das als Hohlkörper (14) ausgebildete Griffstück (12) des Werkzeuges (11) an einem Ende mit einem das Griffstück (12) axial übertragenden Kopfstück (22) ausgestattet ist und dass das Kopfstück (22) mit einer zentrisch zu dem Griffstück (12) angeordneten Aufnahmeöffnung (25) und/oder einer achssenkrecht zu dieser verlaufenden Aufnahmeöffnung (26) zur wahlweise Halterung der Bits (13, 13', 13", 13''') versehen ist.

## Beschreibung

Die Erfindung bezieht sich auf ein Werkzeug zum mobilen Einsatz insbesondere an Radfahrzeugen, mit einem oder mehreren in einem Griffstück eingesetzten Bits, die wahlweise mit dem Griffstück koppelbar sind sowie ein Fahrzeug mit einem als Hohlraum ausgestalteten Rahmen.

Werkzeuge dieser Art sind in zahlreichen unterschiedlichen Ausgestaltungen bekannt. Die einzelnen Bits sind hierbei vielfach in einem Gehäuse lose eingelegt und können mittels eines Spannfutters mit dem hammerkopfartig gestalteten Griffstück verbunden werden. Abgesehen davon, dass durch die nicht arretierten Bits beim Transport des Werkzeuges und auch bei dessen Handhabung oftmals unangenehme Klappergeräusche hervorgerufen werden, ist eine Halterung der Bits an dem Griffstück nur in dessen Fluchtrichtung möglich. Der Einsatzbereich des Werkzeuges ist dadurch begrenzt. Vor allem aber ist bei solchen Werkzeugen von Nachteil, dass diese aufgrund ihrer winkeligen Gestaltung nicht ohne weiteres in einem Hohlraum, z. B. in einem Fahrzeug, unterzubringen sind. Um das Werkzeug zum mobilen Einsatz bei Fahrzeugen nutzen zu können, ist dieses somit in einem gesonderten Behältnis mitzuführen.

Aufgabe der Erfindung ist es daher, ein Werkzeug der vorgenannten Gattung zu schaffen, das nicht nur einfach ausgebildet und vielseitig verwendbar ist, sondern das auch ohne weiteres in einem Hohlraum eines Fahrzeuges unterzubringen ist, so dass das Werkzeug für einen eventuellen Gebrauch stets zur Verfügung steht ohne gesondert gelagert und mitgenommen werden zu müssen. Der Bauaufwand, der erforderlich ist, um dies zu bewerkstelligen, soll gering sein; auch soll das Werkzeug wirtschaftlich herzustellen und vielseitig einsetzbar sein.

Gemäß der Erfindung wird dies bei einem Werkzeug der vorgenannten Art dadurch erreicht, dass das als Hohlkörper ausgebildete Griffstück des Werkzeugs mit einem das Griffstück axial überragenden Kopfstück ausgestaltet ist, und dass das Kopfstück mit einer zentrisch zu dem Griffstück angeordneten Aufnahmeöffnung und/oder einer achssenkrecht zu dieser verlaufenden Aufnahmeöffnung zur wahlweise Halterung eines Bits versehen ist.

Zweckmäßig ist es hierbei, das Kopfstück mittels eines Gewindeansatzes in das Griffstück einzuschrauben und die Aufnahmeöffnungen des Kopfstückes als im Querschnitt sechseckige Sacklochbohrungen auszubilden, wobei zur Halterung der Bits ein den Aufnahmeöffnungen des Kopfstückes, in diese jeweils ein Permanentmagnet eingesetzt sein sollte.

Des Weiteren ist es angezeigt, das Griffstück an dem Kopfstück gegenüberliegenden Ende, mit einem abnehmbaren Deckel zu versehen und den Deckel in den Außenabmessungen größer zu bemessen als das Griffstück. Der Deckel sollte hierbei im Querschnitt zylindrisch ausgebildet und auf der Außenmantelfläche mit einer Rillierung, Rändelung oder einer Riffelung versehen sein.

Angebracht ist es ferner, die Bits in dem Griffstück zwischen dem Kopfstück und dem Deckel über ein oder mehrere Distanzstücke, vorzugsweise aus einem elastisch verformbaren Werkstoff, verspannt abzustützen.

Um die Handhabung zu erleichtern sollte das Griffstück auf der Außenmantelfläche ganz oder abschnittsweise mit einer Rändelung oder einer Riffelung versehen sein.

Bei einem Fahrzeug, das einen Rahmen aufweist, der mit einem Hohlraum versehen ist, kann das Werkzeug in dem Hohlraum des Rahmens eingesetzt werden oder der Hohlraum kann durch das Griffstück des Werkzeuges, das lösbar mit dem Rahmen verbindbar ist, gebildet werden.

Bei dieser Anordnung sollte das Griffstück des Werkzeuges über ein oder mehrere, vorzugsweise als Dichtringe ausgebildete, Distanzstücke elastisch in dem Hohlraum des Rahmens abgestützt sein. Das Griffstück kann aber auch mittels des Deckels oder des Kopfstückes an dem Rahmen des Fahrzeuges angeschraubt werden.

Wird ein Werkzeug gemäß der Erfindung ausgebildet, so ist sichergestellt, dass dieses in einem Fahrzeug, in einem Hohlraum stets mitgeführt werden kann und somit für eine eventuelle Reparatur permanent zur Verfügung steht. Zusätzlicher Bauraum zur Unterbringung des Werkzeuges wird demnach nicht benötigt. Das Werkzeug kann vielmehr in der Lenkstange oder dem Sattelrohr des Rahmens eingesetzt und im Bedarfsfalle leicht herausgenommen werden.

Außerdem ist das Werkzeug aufgrund seiner einfachen Ausgestaltung wirtschaftlich herstellbar und da Bits in zwei unterschiedlichen Winkelstellungen in dem Griffstück zu haltern sind, auch in vielseitiger Weise einsetzbar. Das Vorschlagsgemäß gestaltete kleinbauende Werkzeug ist demnach in vorteilhafter Weise bei einfacher Handhabung für mobile Einsätze in besonderer Weise geeignet.

In der Zeichnung ist ein Ausführungsbeispiel des gemäß der Erfindung ausgebildeten Werkzeuges dargestellt, das nachfolgend im Einzelnen erläutert ist. Hierbei zeigen:
- Figur 1: ein Fahrrad, das mit einem wahlweise in der Lenkstange bzw. dem Sattelrohr eingesetzten Werkzeug versehen ist in einer perspektivischen Darstellung,
- Figur 2: das in der Lenkstange des Fahrrades nach Figur 1 angeordneten Werkzeug in einem Schnitt nach der Linie II/II der Figur 1,
- Figuren 3a u. b: jeweils einen Ausschnitt des Werkzeuges nach Figur 2 mit unterschiedlich eingesetzten Bits und
- Figur 4: das Werkzeug nach Figur 2 in einer verkleinerten perspektivischen Darstellung.

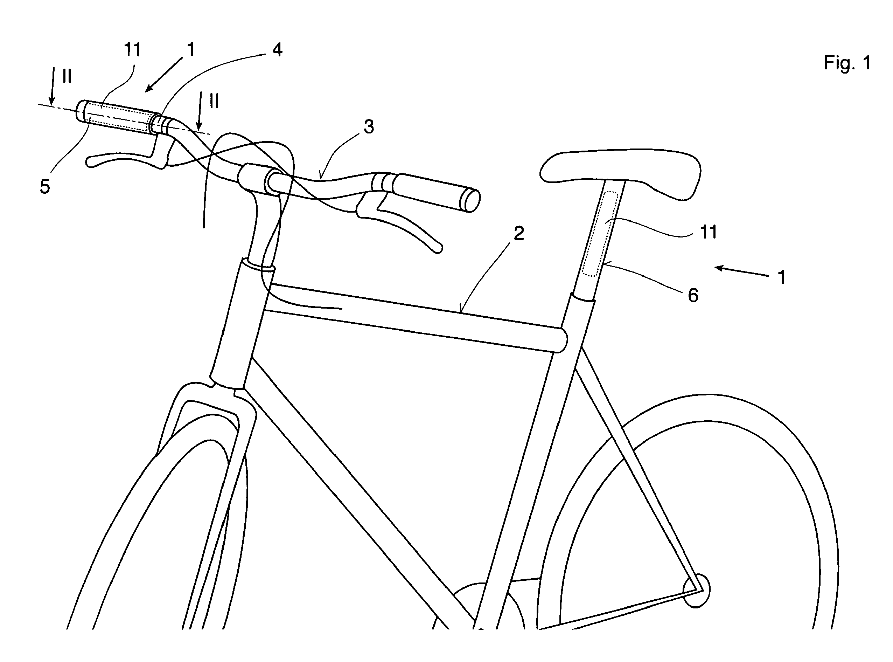

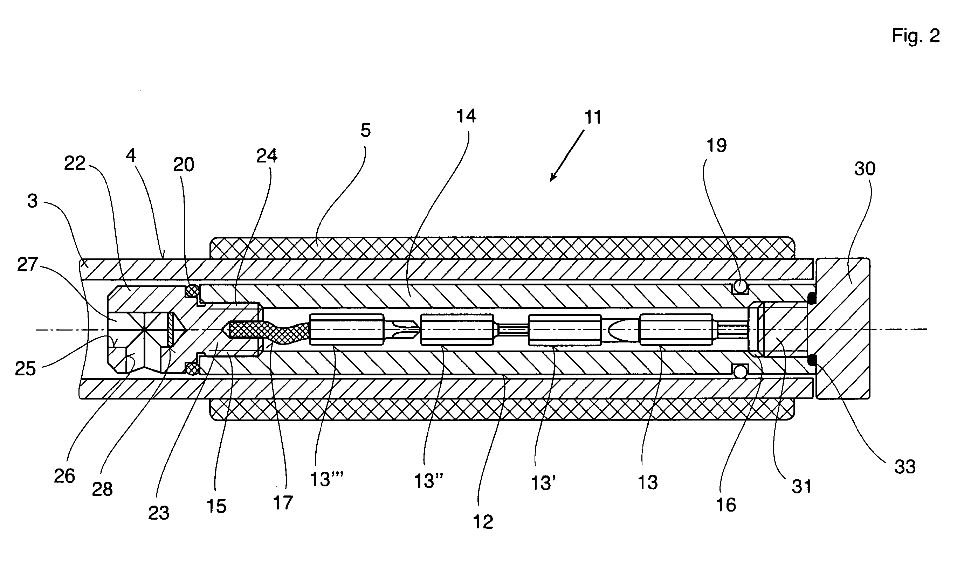

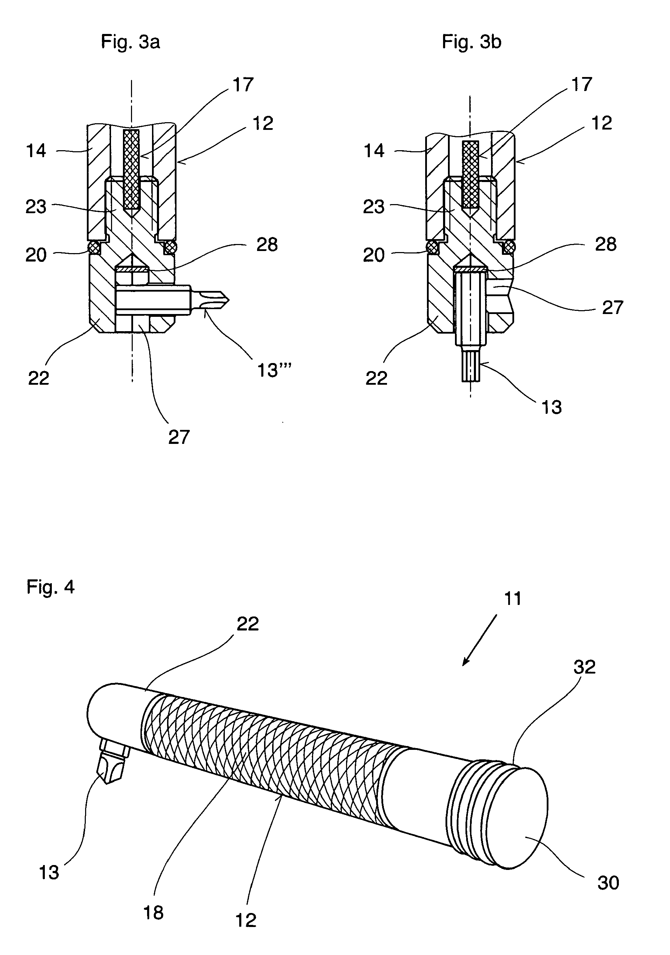

Das in den Figuren 2 und 4 dargestellte und jeweils mit 11 bezeichnete Werkzeug ist zum mobilen Einsatz, z.B. bei dem in Figur 1 gezeigten Fahrrad 1 vorgesehen. Damit das Werkzeug 11 für eine eventuelle Reparatur an dem Fahrrad 1 jederzeit zur Verfügung steht, ist das Werkzeug 11 wahlweise in der an dem Rahmen 2 des Fahrrades 1 angebrachten Lenkstange 3 oder einem ebenfalls an dem Rahmen 2 abgestützten Sattelrohr 6 untergebracht, aus denen das Werkzeug 11 im Bedarfsfall leicht und in kurzer Zeit entnommen werden kann.

Das Werkzeug 11 besteht, wie dies insbesondere den Figuren 2, 3a und 3b zu entnehmen ist, im wesentlichen aus einem als zylindrischer Hohlkörper 14 ausgebildeten Griffstück 12, in dem mehrere unterschiedlich gestaltete Bits 13, 13', 13" und 13"' eingesetzt sind. An den beiden Enden des Griffstückes 12 ist dieses durch ein Kopfstück 21 und durch einen Deckel 30 verschlossen. Das Kopfstück 22 ist hierbei mittels eines mit einem Außengewinde 24 versehenen Ansatzes 23 in ein in das Griffstück 12 eingearbeitetes Innengewinde 15 eingeschraubt. Während der Montage des Kopfstückes 22 wird Klebstoff in die Gewindegänge eingebracht, der anschließend aushärtet, so dass das Kopfstück 22 fest mit dem Griffstück 12 verbunden ist. Der Deckel 30 wird mittels eines Gewindeansatzes 31 ebenfalls in einem Innengewinde 16 des Griffstückes 12 gehalten. Der Deckel 30 kann somit jederzeit von dem Griffstück 12 abgenommen werden.

Die Bits 13, 13', 13" und 13''' sind, um Klappergeräusche zu vermeiden, unter Vorspannung zwischen dem Kopfstück 22 und dem Deckel 30, der über den Dichtring 20 an dem Griffstück 12 anliegt, eingesetzt. Dazu dient ein Distanzstück 17 aus einem elastisch verformbaren Werkstoff, durch das die Bits 13, 13', 13" und 13''' aneinander gepresst werden. Außerdem ist das Griffstück 12 über zwei Dichtringe 19 und 20 an dem mit einer Ummantelung 5 ausgestatteten Griff 4 der Lenkstange 3 abgestützt.

Um das Werkzeug 11 bei Herausnahme aus dem Griff der Lenkstange 3 bzw. dem Sattelrohr 6 in einen gebrauchsfähigen Zustand bringen zu können, ist das Griffstück 12 mit einem Kopfstück 22 ausgestattet, das das Griffstück 12 in axialer Richtung überragt und zwei Aufnahmeöffnungen 25 und 26 aufweist. Die Aufnahmeöffnungen 25 und 26 sind als Sacklochbohrungen 27 ausgebildet und achssenkrecht zueinander angeordnet, so dass das jeweilige benötigte Bit 13, 13', 13" bzw. 13''', wie dies in Figur 3a dargestellt ist, rechtwinklig zu dem Griffstück 12 oder gemäß Figur 3b in dessen Achsrichtung mit dem Griffstück 12 gekoppelt werden können.

Zur Halterung der Bits 13, 13', 13" oder 13"' in den Sacklochbohrungen 27 ist ein Permanentmagnet 28 eingesetzt. Außerdem sind das Griffstück 12 mit Rändelungen 18 und der Deckel 30 auf den Außenmantelflächen mit Rillierungen 32 ausgestattet. Die Handhabung des Griffstückes 12 wird dadurch erleichtert. Ebenso kann der Deckel 30 bei dessen Aufschrauben, um einzelne Bits 13, 13', 13" bzw. 13''' aus dem Hohlkörper 14 des Griffstückes 12 herausnehmen zu können, leicht aufgeschraubt werden. Das Werkzeug 11 steht somit bei einer eventuellen Reparatur an dem Fahrzeug 1 kurzfristig zur Verfügung.

## Patentansprüche

1. Werkzeug (11) zum mobilen Einsatz, insbesondere an Radfahrzeugen (12), mit einem oder mehreren in einem Griffstück (12) eingesetzten Bits (13, 13', 13", 13'''), die wahlweise mit dem Griffstück (12) koppelbar sind,
**dadurch gekennzeichnet,**
**dass** das als Hohlkörper (14) ausgebildete Griffstück (12) des Werkzeuges (11) an einem Ende mit einem das Griffstück (12) axial übertragenden Kopfstück (22) ausgestattet ist und dass das Kopfstück (22) mit einer zentrisch zu dem Griffstück (12) angeordneten Aufnahmeöffnung (25) und/oder einer achssenkrecht zu dieser verlaufenden Aufnahmeöffnung (26) zur wahlweise Halterung der Bits (13, 13', 13", 13''') versehen ist.

2. Werkzeug nach Anspruch 1,
**dadurch gekennzeichnet,**
**dass** das Kopfstück (22) mittels eines Gewindeansatzes (23) in das Griffstück (12) eingeschraubt ist.

3. Werkzeug nach Anspruch 1 oder 2,
**dadurch gekennzeichnet,**
**dass** die Aufnahmeöffnungen (25, 26) des Kopfstückes (22) als querschnittsechseckige Sacklochbohrungen (27) ausgebildet sind.

4. Werkzeug nach Anspruch 3,
**dadurch gekennzeichnet,**
**dass** zur Halterung der Bits (13, 13', 13", 13''') in den Aufnahmeöffnungen (25, 26) des Kopfstückes (22) ein Permanentmagnet (28) eingesetzt ist.

5. Werkzeug nach einem oder mehreren der Ansprüche 1 bis 4,
**dadurch gekennzeichnet,**
**dass** das Griffstück (12) an dem dem Kopfstück (22) gegenüberliegenden Ende mit einem abnehmbaren Deckel (30) versehen ist.

6. Werkzeug nach Anspruch 5,
**dadurch gekennzeichnet,**
**dass** der Deckel (30) in den Außenabmessungen größer bemessen ist als das Griffstück (12).

7. Werkzeug nach Anspruch 5 oder 6,
**dadurch gekennzeichnet,**
**dass** der Deckel (30) im Querschnitt zylindrisch ausgebildet und auf der Außenmantelfläche mit einer Rillierung (32), einer Rändelung oder einer Riffelung versehen ist.

8. Werkzeug nach einem oder mehreren der Ansprüche 1 bis 7,
**dadurch gekennzeichnet,**
**dass** die Bits (13, 13', 13", 13''') in dem Griffstück (12) zwischen dem Kopfstück (22) und dem Deckel (30) über ein oder mehrere Distanzstücke (17), vorzugsweise aus einem elastisch verformbaren Werkstoff, verspannt abgestützt sind.

9. Werkzeug nach einem oder mehreren der Ansprüche 1 bis 8,
**dadurch gekennzeichnet,**
**dass** das Griffstück (12) auf der Außenmantelfläche ganz oder abschnittsweise mit einer Rändelung (18) oder einer Riffelung versehen ist.

10. Werkzeug nach einem der vorgenannten Ansprüche,
**dadurch gekennzeichnet,**
**dass** das Werkzeug (11) in einen im Rahmen (2) des Fahrzeuges (12) vorgesehenen Hohlraum (3, 6) eingesetzt ist.

11. Werkzeug nach Anspruch 10,
**dadurch gekennzeichnet,**
**dass** das Werkzeug (11) über mehrere als Dichtringe ausgebildete Distanzstücke elastisch in dem Hohlraum (3, 6) abgestützt ist.

12. Fahrzeug, das einen Rahmen (2) aufweist, der mit einem Hohlraum (3, 6) versehen ist,
**dadurch gekennzeichnet,**
**dass** in dem Hohlraum (3, 6) des Rahmens (2) ein nach einem oder mehreren der Ansprüche 1 bis 9 gestaltetes Werkzeug (11) eingesetzt ist oder dass der Hohlraum durch das Griffstück (12) des Werkzeuges (11), das lösbar mit dem Rahmen (2) verbindbar ist, gebildet ist.

13. Fahrzeug nach Anspruch 12,
**dadurch gekennzeichnet,**
**dass** das Werkzeug (11) über als Dichtringe ausgebildete Distanzstücke elastisch in dem Hohlraum (3, 6) abgestützt ist.

14. Fahrzeug nach Anspruch 12,
**dadurch gekennzeichnet,**
**dass** das Griffstück (11) mittels des Deckels (30) oder des Kopfstückes (21) an dem Rahmen (2) des Fahrzeuges (1) angeschraubt ist.
